# EUROPEAN PATENT APPLICATION

(11) **EP 3 421 926 A1**
(43) Date of publication of application: **02.01.2019**
(21) Application number: 16891539.5
(22) Date of filing: 26.02.2016
(51) Int. Cl.: G01B 7/00

(54) **SIGNAL OUTPUT DEVICE AND IMAGE PICKUP DEVICE**

(71) Applicant: Blincam Co.,ltd., Tokyo 1640013 (JP)
(72) Inventor: INAMI Makoto, Fuchu-shi Tokyo 183-0022 (JP)
(74) Representative: Vossius & Partner Patentanwälte Rechtsanwälte mbB
(86) International application number: PCT/JP2016/055892
(87) International publication number: WO 2017/145382

(57) **Abstract**

Detection accuracy is enhanced.

An imaging apparatus 1 includes an electric field generation antenna 32 which is arranged at a position not in contact with a human body and generates an electric field, an electric field change recognition unit 33 which detects displacement of the generated electric field, and a CPU 31 which outputs a signal according to the detection by the electric field change recognition unit 33.

## Description

### Technical Field

The present invention relates to a signal output apparatus and an imaging apparatus.

### Background Art

An apparatus, which outputs a control signal to an external device based on the detection result of a sensor, has been known.

For example, there has been known an apparatus including at least one sensor, which detects a variation of the epidermis accompanying the movement of the human lower jaw, and a signal generation unit which generates a control signal based on the variation of the epidermis.

Moreover, an eye-gaze interface using headphones has been proposed. Specifically, an apparatus, which detects EOG accompanying the human oculogyration as a detection signal by sticking a plurality of electrodes to positions in the vicinities of both ears on which the headphones are worn, and estimates the direction of human gaze, for example, by using the Kalman filter, has been known.

### Citation List

### Patent Literature

Patent Literature 1: JP 2008-304451 A

### Non Patent Literature

Non Patent Literature 1: "Headphone Shaped Eye-Gaze Interface" by Hiroyuki Manabe and Masaaki Fukumoto, Interaction 2006 Papers, The Information Processing Society of Japan, 2006, p23-24

### Summary of Invention

### Technical Problem

Consider a case where an optical sensor is used for the sensor. In this case, since the sunlight is stronger under the sunlight, there is a problem that the detection accuracy of the sensor deteriorates.

Moreover, if a sensor in contact with a human body is used, there are problems that wearing and detachment are troublesome and the appearance does not look good.

In one aspect, an object of the present invention is to enhance the detection accuracy.

### Solution to Problem

In order to achieve the above object, a disclosed signal output apparatus is provided. This signal output apparatus has a generation unit which is arranged at a position not in contact with a human body and generates an electric field, a detection unit which detects displacement of the generated electric field, and a signal output unit which outputs a signal according to detection by the detection unit.

### Advantageous Effects of Invention

In one aspect, an object is to enhance the detection accuracy.

These and other objects, features and advantages of the present invention will become apparent from the following description associated with the accompanying drawings which illustrate preferred embodiments as examples of the present invention.

### Brief Description of Drawings

Fig. 1 is a view illustrating an imaging apparatus according to an embodiment.
Fig. 2 is a view illustrating a hardware configuration of the imaging apparatus according to the embodiment.
Fig. 3 is a diagram showing one example of parameters stored in the RAM.
Fig. 4 is a diagram showing one example of data stored in the RAM.
Fig. 5 is a flowchart for explaining all the processings of the imaging apparatus according to the embodiment.
Fig. 6 is a flowchart for explaining the calibration processing.
Fig. 7 is a flowchart for explaining the calibration execution determination processing.
Fig. 8 is a flowchart for explaining the sensor monitoring processing.
Fig. 9 is a flowchart for explaining the shuttering determination processing.

### Description of Embodiments

Hereinafter, an imaging apparatus according to an embodiment will be described in detail with reference to the drawings.

### <Embodiments>

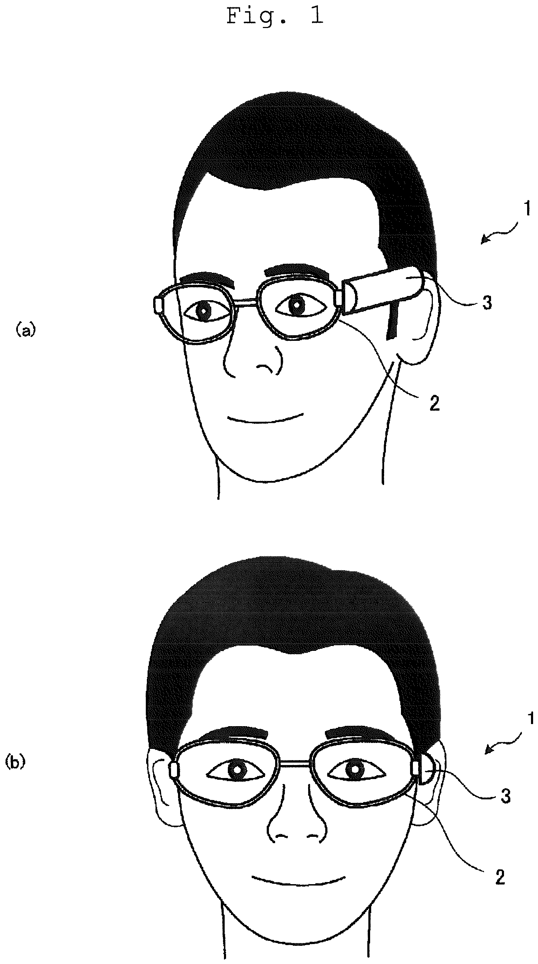

Fig. 1 is a view illustrating the imaging apparatus according to the embodiment.

Fig. 1(a) is a perspective view of the imaging apparatus, and Fig. 1(b) is a front view of the imaging apparatus.

An imaging apparatus 1 of a first embodiment is a spectacle type apparatus. Note that the imaging apparatus 1 will be described as a spectacle type in the embodiment, but is not limited thereto. The shape of the apparatus is not particularly limited as long as the apparatus can be worn in the vicinity of the face in a hands-free manner.

The imaging apparatus 1 includes a frame 2 which includes an attachment unit attached to an ear and is worn on a part of the face, and a control unit 3.

The control unit 3 is arranged on a side opposite to the eye through the frame 2.

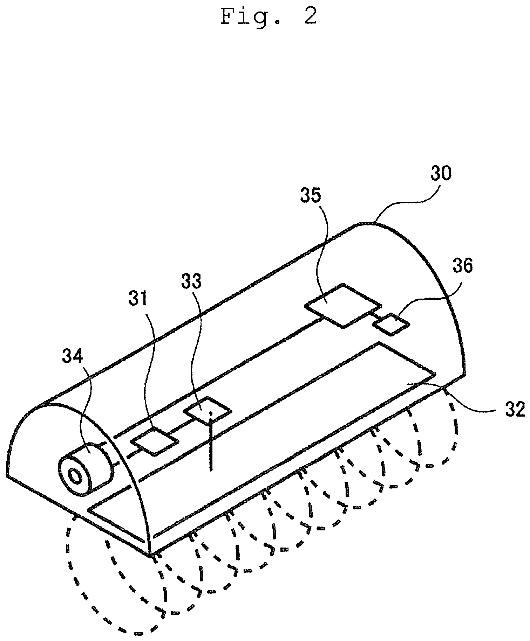

Fig. 2 is a view illustrating a hardware configuration of the imaging apparatus according to the embodiment.

The control unit 3 includes a housing (casing) 30, a CPU 31, an electric field generation antenna 32, an electric field change recognition unit 33, a camera 34, a memory 35 and a communication interface 36.

The control unit 3 is entirely controlled by the central processing unit (CPU) 31.

A random access memory (RAM) included in the CPU 31 is used as a main storage apparatus of the imaging apparatus 1. At least part of a program executed by the CPU 31 is stored in the RAM. Moreover, various data used for the processings by the CPU 31 are stored in the RAM.

Furthermore, the CPU 31 produces a shuttering signal for shuttering the camera 34.

The electric field generation antenna 32 generates an electric field in response to an instruction from the CPU 31. In Fig. 2, an image of the generated electric field is illustrated by a dotted line.

The electric field generation antenna 32 creates the electric field in a space sandwiched between an electrode face and a face spaced apart from the electrode face by the maximum of 15 cm.

The electric field change recognition unit 33 detects a change in the electric field generated by the electric field generation antenna 32. Specifically, the electric field change recognition unit 33 detects, for example, a change in the movement of a human body (the movement of the face in particular), such as an eye, the corner of an eye, glabella, a temple or the like. Then, the electric field change recognition unit 33 outputs an analog signal (analog detection signal) with a magnitude corresponding to the detected change amount.

This electric field change recognition unit 33 can set a plurality of points (axes) at which a change in an electric field can be detected. Thus, for example, in terms of a change in an eye, besides the detection of a blink, it is also possible to detect the movement of an eyeball (where the eyeball is directed horizontally and vertically and where the eyeball is focusing) and detect a complicated blink (detection of the strength of a blink and a plurality of blinks). Moreover, it is also possible to detect a plurality of movements, such as of an eye and glabella, an eye and a temple, and the like.

Hereinafter, a case where a blink is detected to shutter the camera 34 will be described as one example.

Even when accommodated inside the housing 30, the electric field change recognition unit 33 can detect a blink in the space sandwiched between the electrode face and the face spaced apart from the electrode face by the maximum of 15 cm. Thus, it is unnecessary to drill holes in the case, unlike a camera system or an infrared system. Moreover, blinking motion can be detected without being affected by the ambient light/sound.

The CPU 31 digitizes the analog detection signal outputted by the electric field change recognition unit 33 and stores the signal in the RAM.

Note that examples of the electric field change recognition unit 33 include, for example, a control IC such as MGC3030 or MGC3130 of Microchip Technology Inc.

The camera 34 includes an imaging element and shutters itself when the shuttering signal is sent from the CPU 31.

Examples of the type of imaging element used for the camera 34 include charged-coupled devices (CCD), complementary metal-oxide-semiconductor (CMOS), and the like.

The incorporated memory 35 writes in and reads out data imaged by the camera 34. Note that examples of the incorporated memory 35 include, for example, semiconductor storage apparatuses such as a flash memory and the like.

The communication interface 36 transmits the data to another computer or a communication device. Examples of the communication interface 36 include, for example, Bluetooth (registered trademark) and the like.

With the hardware configuration as described above, the processing functions of the present embodiment can be realized.

Next, information stored in the RAM will be described.

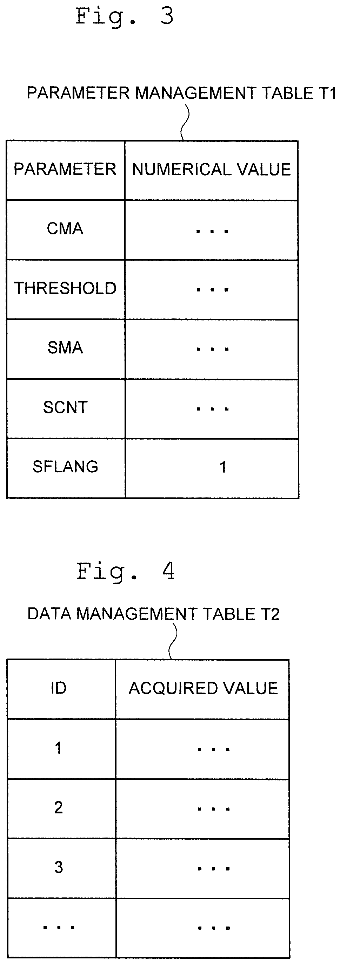

Fig. 3 is a diagram showing one example of parameters stored in the RAM.

In Fig. 3, the parameters are tabulated and stored.

In a parameter management table T1, parameter and numerical value fields are provided. The Information aligned in the horizontal direction is associated with each other.

In a parameter field, the parameters used for the processings of the CPU 31 are set.

In a CMA field, the mode value of the analog detection signals obtained by calibration processing described later is set.

In a threshold field, a threshold for deciding whether or not to press the shutter is set. A value of the threshold is determined by calibration execution determination processing described later.

In an SMA field, a value exceeding the threshold during shuttering determination processing described later is stored.

In an SCNT field, the number of times exceeding the threshold during the shuttering processing is stored.

In an SFLAG field, a value for identifying whether or not to cause the CPU 31 to shutter the camera 34 is stored. When "1" is stored in this field, the CPU 31 produces the shuttering signal for shuttering the camera 34.

Fig. 4 is a diagram showing one example of data stored in the RAM.

In Fig. 4, the data is tabulated and stored.

In a data management table T1, ID and numerical value fields are provided. The Information aligned in the horizontal direction is associated with each other.

In the ID field, the unit (resolution) of the analog detection signal digitized by the CPU 31 is set.

In the acquired value field, the values of the signals obtained by digitizing the analog detection signals by the CPU 31 are stored.

Next, the processings of the imaging apparatus 1 will be described with reference to flowcharts.

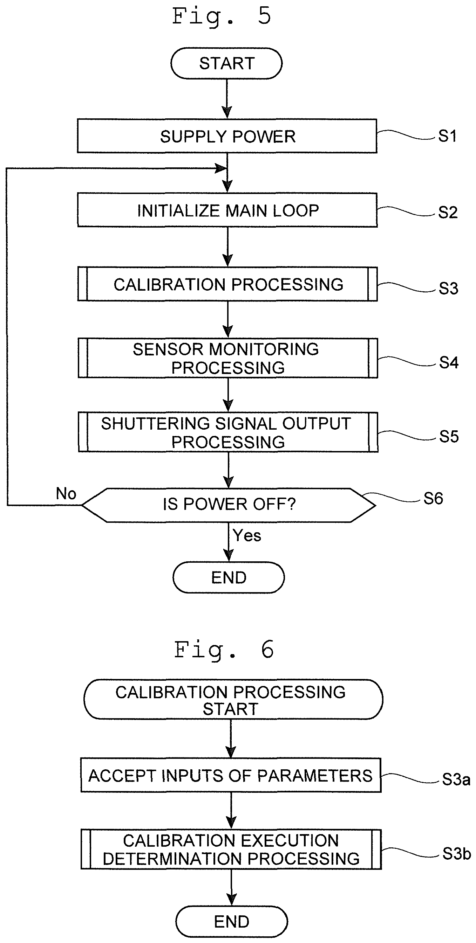

Fig. 5 is a flowchart for explaining all the processings of the imaging apparatus according to the embodiment.

[Step S1] When the power is supplied, the CPU 31 causes the electric field generation antenna 32 to generate the electric field. Thereafter, the processing proceeds to Step S2.

[Step S2] The CPU 31 initializes the main loop. Specifically, the CPU 31 resets the numerical values set in the numerical value fields of the parameter management table T1 to zero. Then, a predetermined initial value is set in the threshold field. Thereafter, the processing proceeds to Step S3.

[Step S3] The CPU 31 executes the calibration processing and performs calibration depending on the situation. Note that the processing contents of the calibration processing will be described in detail later. Thereafter, the processing proceeds to Step S4.

[Step S4] The CPU 31 executes sensor monitoring processing and determines whether or not to shutter depending on the situation. When it is judged to shutter, the CPU 31 sets the numerical value in the SGLAG field of the parameter management table T1 to "1." Note that the processing contents of the sensor monitoring processing will be described in detail later. Thereafter, the processing proceeds to Step S5.

[Step S5] When it is judged to shutter in Step S4, the CPU 31 executes shuttering signal output processing of sending the shuttering signal to the camera 34 to shutter. Specifically, the CPU 31 refers to the SGLAG field of the parameter management table T1. Then, if SGFLAG is "1," the shuttering signal for shuttering is sent to the camera 34. Thereafter, the processing proceeds to Step S6.

[Step S6] The CPU 31 judges whether or not the power is off. When the power is not off (No in Step S6), the processing proceeds to Step S2, and the processings subsequent to Step S2 are continuously executed. When the power is off (Yes in Step S6), the processings in Fig. 5 end.

Note that the processing time per loop of all the processings is 1000 ms as one example.

As one example, the processing time for each step is 0 ms to 2 ms in Step S2, 3 ms to 100 ms in the calibration processing in Step S3, and 101 ms to 998 ms in the sensor monitoring processing in Step S4.

Next, the calibration processing in Step S3 will be described using a flowchart.

Fig. 6 is a flowchart for explaining the calibration processing.

[Step S3a] The CPU 31 accepts inputs of the analog detection signals from the electric field change recognition unit 33. The CPU 31 digitizes the accepted analog detection signals and stores the signals in the acquired value fields of the data management table T2. Thereafter, the processing proceeds to Step S3b.

[Step S3b] The CPU 31 executes calibration execution determination processing for determining whether or not to execute the calibration. The processing contents will be described in detail later. Thereafter, the calibration processing ends.

This concludes the description of the calibration processing.

Next, the calibration execution determination processing in Step S3b will be described using a flowchart.

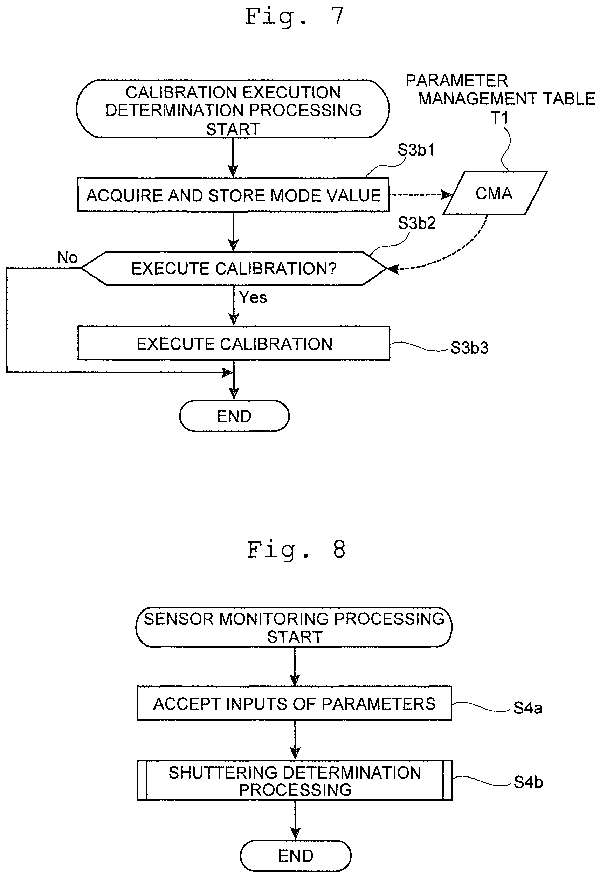

Fig. 7 is a flowchart for explaining the calibration execution determination processing.

[Step S3b1] The CPU 31 refers to the acquired value fields of the analog data management table T2. Then, the mode value of the acquired values is determined. Then, the CPU 31 sets the determined mode value in the CMA field of the parameter management table. Thereafter, the processing proceeds to Step S3b2.

[Step S3b2] The CPU 31 judges whether or not to execute the calibration. Specifically, the numerical value stored in the CMA field is compared with the numerical value stored in the threshold field in the parameter management table T1. Then, when both values are apart by a predetermined value or more, it is judged that the calibration is executed. When the calibration is executed (Yes in Step S3b2), the processing proceeds to Step S3b3. When the calibration is not executed (No in Step S3b2), the calibration execution determination processing ends.

[Step S3b3] The CPU 31 sets (overwrites) the value stored in the CMA field of the parameter management table T1 to the threshold field. Thereafter, the calibration execution determination processing ends.

Note that the processing time of the calibration execution determination processing is 48 ms to 100 ms as one example.

Next, the sensor monitoring processing in Step S4 will be described using a flowchart.

Fig. 8 is a flowchart for explaining the sensor monitoring processing.

[Step S4a] The CPU 31 accepts inputs of the detection signals from the electric field change recognition unit 33. The CPU 31 stores the accepted detection signals in the acquired value fields of the analog data management table T2. Thereafter, the processing proceeds to Step S4b.

[Step S4b] The CPU 31 executes shuttering determination processing for determining whether or not to press a shutter. The processing contents will be described in detail later. Thereafter, the sensor monitoring processing ends.

This concludes the description of the sensor monitoring processing.

Next, the shuttering determination processing in Step S4b will be described using a flowchart.

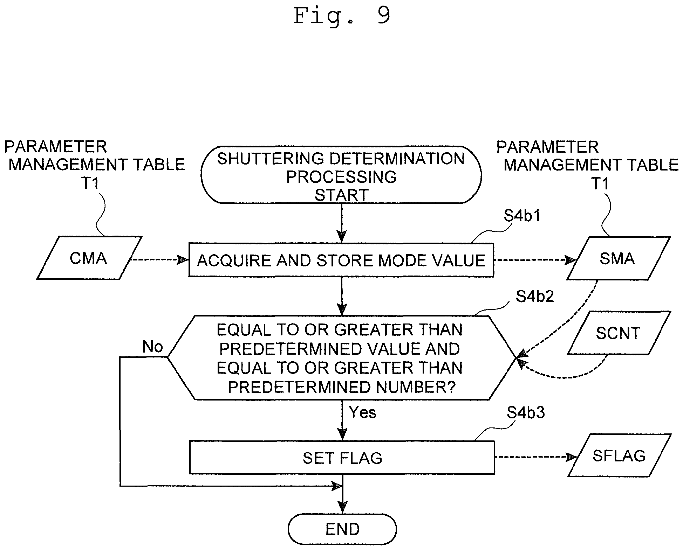

Fig. 9 is a flowchart for explaining the shuttering determination processing.

[Step S4b1] The CPU 31 refers to the parameter management table T1 and the data management table T2. Then, the CPU 31 counts the number of times that each acquired value in the data management table T2 has exceeded the threshold. Then, when there is the number of times exceeding the threshold, the exceeded value is stored in the SMA field of the parameter management table T1. In addition, the number of times of exceeding the threshold is stored in the SCNT field of the parameter management table T1. Thereafter, the processing proceeds to Step S4b2.

[Step S4b2] The CPU 31 refers to the parameter management table T1. Then, by using the value stored in the SMA field and the value stored in the SCNT field, it is determined whether or not to press the shutter. Specifically, when the value stored in the SMA filed is equal to or greater than the predetermined value and the number of SCNT is equal to or greater than the predetermined number (Yes in Step S4b2), the CPU 31 proceeds to Step S4b3. When the value stored in the SMA field is less than the predetermined value or the number of SCNT is less than the predetermined number (No in Step S4b2), the shuttering determination processing ends.

[Step S4b3] The CPU 31 sets "1" in the SFLAG field of the parameter management table T1. Thereafter, the shuttering determination processing ends.

Note that the processing time of the shuttering determination processing is 450 ms to 998 ms as one example.

Note that the number has been counted in Step S4b1 in the present embodiment, but the time exceeding the threshold may be measured. In this case, in Step S4b2, when the value stored in the SMA field is greater than a predetermined value and the time exceeding the threshold is longer than a certain period of time, the CPU 31 proceeds to Step S4b3.

By executing the shuttering determination processing according to the present embodiment, it is possible to determine to shutter when a change in conscious movement of the human body is detected, and to suppress to shutter due to unconscious (natural) movement of the human body.

As described above, according to the imaging apparatus 1, it is possible to detect human motion (e.g., a blink and the like) in the space sandwiched between the electrode face and the face spaced apart from the electrode face by the maximum of about 15 cm even when the electrode is accommodated inside the housing. Therefore, it is unnecessary to drill holes in the case unlike a system that images the movement of the face by the camera to shutter or a system that detects the movement of the face with infrared rays to shutter. Moreover, an arrangement is also possible on the side opposite to the eye through the frame 2. Furthermore, the human motion can be detected without being affected by the ambient light/sound.

Further, as previously mentioned, the electric field change recognition unit 33 can set the plurality of points (axes) at which the change in the electric field can be detected. Thus, for example, in terms of a change in an eye, besides the detection of a blink, it is also possible to detect the movement of an eyeball (where the eyeball is directed horizontally and vertically and where the eyeball is focusing) and detect a complicated blink (detection of the strength of a blink and a plurality of blinks). Moreover, it is also possible to detect a plurality of movements, such as of an eye and glabella, an eye and a temple, and the like. Thus, by causing the plurality of motion patterns of the human body set in advance to be detected, the imaging apparatus 1 can also be caused to execute a plurality of functions. For example, when intentional blinking motion of the human body is detected, the camera 34 is shuttered to capture a still image. When the intentional blinking motion of the human body is detected twice successively, it is possible to shutter the camera 34 to capture a moving image, and the like.

Note that the camera is included in the control unit 3 to form an integrated module in the present embodiment. However, the present invention is not limited to thereto, and a signal output apparatus not including a camera may be used. Applications of this signal output apparatus include, for example, ON/OFF of the operation of electronic devices (e.g., a starter of an engine of an automobile, locking and unlocking of an electronic door at home, ON/OFF and channel manipulation of a TV, complicated manipulation such as of a mouse for a computer, and the like).

The signal output apparatus and the imaging apparatus of the present invention have been described above based on the illustrated embodiments, but the present invention is not limited thereto, and the configuration of each unit can be replaced with any configuration having similar functions. Moreover, other optional components and steps may be added to the present invention.

Furthermore, the present invention may be a combination of any two or more configurations (features) of the embodiments previously mentioned.

The above merely illustrates the principle of the present invention. Further, numerous modifications and variations are possible to those skilled in the art, and the present invention is not limited to the precise configuration and application examples shown and described above, and all corresponding modification examples and equivalents are regarded as within the scope of the present invention defined by the appended claims and the equivalents thereof.

### Reference Signs List

- 1: Imaging apparatus
- 2: Frame
- 3: Control unit
- 30: Housing
- 31: CPU
- 32: Electric field generation antenna
- 33: Electric field change recognition unit
- 34: Camera
- 35: Memory
- 36: Communication interface
- T1: Parameter management table
- T2: Data management table

## Claims

1. A signal output apparatus comprising:
a generation unit which is arranged at a position not in contact with a human body and generates an electric field;
a detection unit which detects displacement of the generated electric field; and
a signal output unit which outputs a signal according to detection by the detection unit.

2. The signal output apparatus according to claim 1, wherein the detection unit detects movement of an eye by detecting a blink by using the electric field.

3. The signal output apparatus according to claim 1 or 2, comprising a frame worn on a part of a face,
wherein the detection unit is arranged at a side opposite to the eye through the frame.

4. An imaging apparatus comprising:
a generation unit which is arranged at a position not in contact with a human body and generates an electric field;
a detection unit which detects displacement of the generated electric field; and
an imaging unit which starts imaging according to detection by the detection unit.
